# EUROPEAN PATENT APPLICATION

(11) **EP 1 628 069 A1**
(43) Date of publication of application: **22.02.2006**
(21) Application number: 05076915.7
(22) Date of filing: 19.08.2005
(51) Int. Cl.: F16L 59/20, F16L 13/11

(54) **Method for installing a heat distribution system**

(30) Priority: 19.08.2004 NL 1026881
(71) Applicant: Nuon Tecno B.V., 6921 RL Duiven (NL)
(72) Inventor: Smies, Cornelis Adriaan, 7451 JG Holten (NL)
(74) Representative: Winckels, Johannes Hubertus F.

(57) **Abstract**

A method for installing a heat distribution system, wherein insulated flexible plastic pipes (1, 2, 3, 4) intended for transporting a heat transporting fluid are coupled by front ends (21, 22, 23, 24), the coupling being effected by:
a) providing a fluid communication (14) between at least two ends (21, 22, 23, 24) to be coupled of respective pipes (1, 2, 3, 4);
b) wrapping wrapping material around at least said pipe ends (21, 22, 23, 24) and said fluid communication (14); and
c) filling an inside space (19) extending between, on the one side, the wrapping material (9) and, on the other side, said pipes (1, 2, 3, 4) and said fluid communication (14) at least with hardening filler.

## Description

The invention relates to a method for installing a heat distribution system. In addition, the invention relates to a heat distribution system.

Such a heat distribution system is known from practice and can for instance be intended to couple buildings to one or more fluid heating installations, for the purpose of, for instance, district heating. The known system is particularly designed to transport a heated fluid, for instance hot water.

From practice, various methods are known for installing heat distribution systems. It is known, for instance, to build such a heat distribution system up from relatively short, rigid metal pipes, which pipes are provided with insulation and an outer jacket. This method known from practice and the system originating therefrom have various drawbacks. The system is, for instance, relatively expensive, it requires relatively much space and it is susceptible to leakage. This known system further consists of relatively many parts, in particular when the pipes are provided with relatively many branches, especially to connect for instance buildings to a main duct of the system. As a rule, in that case, two separate branches are made on the main duct for the purpose of connecting one building, i.e. one branch of a supply pipe and one branch of a return pipe. Each branch is coupled to the respective pipe by separate coupling means such that the pipe as well as the outer jacket of the branch connect in a fluid-tight manner to those of the main duct. This leads to high costs for the system and a labour intensive process for installation of the system.

From practice, further, a second system is known which is provided with flexible plastic ducts, each comprising a flexible insulating jacket and one or more flexible plastic inside pipes. Such a system is put on the market by, for instance, Thermaflex Insulation Ltd. of Waalwijk, the Netherlands, under the name Flexalen. This system has various advantages over the known heat distribution system provided with metal pipes. For instance, the flexible ducts of this system can be installed relatively easily, in particular in that the ducts can easily be unwound from a roll and can be laid in a desired direction. This system further takes up less space both prior to and after installation of the flexible ducts. Moreover, the insulating action of this system provided with flexible pipes is relatively high. Further, this second system itself consists of relatively few parts, which makes it relatively inexpensive. However, it proves relatively difficult to couple the pipes and ducts of this second, known system in a liquid-tight manner, and in particular the pipe sleeve, which renders the plastic pipe system also susceptible to leakage.

It is known, for instance, to use a rigid shell which shell is arranged on the parts to be coupled of the plastic ducts and pipes. The dimensions of the shell are specifically geared to the outside diameters of the ducts to be coupled. Then, the medium pipes are coupled through couplings. Thereupon, the inside space surrounded by the shell is filled with a hardening filler. The shell can be used only once. This known method for coupling the pipes of the ducts is relatively expensive, difficult to perform and therefore labour intensive. Furthermore, this method requires relatively much filler for filling the inside space, thereby rendering the thus obtained couplings relatively heavy, in particular with respect to the weight of the ducts to be coupled. In addition, with this second system, it appears difficult to provide a relatively large amount of branches on a main duct in a durable and leak-proof manner. Further, a coupling obtained with this known method occupies relatively much space, in particular when one or more branches are provided.

The present invention contemplates an improvement over the method for installing a heat distribution system. In particular, the invention contemplates a method with which flexible plastic pipes can be connected to each other in a relatively simple, but still sufficiently durable manner.

According to the invention, to this end, a method is provided which is characterized by the features of claim 1.

According to the invention, insulated flexible plastic pipes intended for transporting a heat transporting fluid, are coupled by front ends while coupling is effected by:
a) providing a fluid communication between two ends to be coupled of respective pipes;
b) wrapping wrapping material around at least the pipe ends and the fluid communication; and
c) filling an inside space extending between, on the one side, the wrapping material and, on the other side, the pipes and the fluid communication at least with hardening filler;

wherein at least three flexible insulated ducts are provided, each individual duct comprising at least one first pipe, for instance a supply pipe or a return pipe, while the first pipes of the at least three flexible ducts are coupled by front ends by means of the above steps a), b) and c).

Thus, in a surprisingly simple manner with relatively inexpensive means, it appears that a relatively durable coupling can be effected between pipes of the heat transporting system, in particular at a branch. Furthermore, in this manner, preferably a relatively liquid-tight connection between the pipes to be coupled to each other can be obtained so that leakages can be properly avoided. The wrapping material can be applied relatively rapidly. Moreover, the wrapping material can adjust itself to the shape, diameter and the like of the pipes. Thus, in a fairly simply manner, an inside space can be formed which space is filled up with the filler to obtain the desired coupling. After having been provided in the inside space, the filler can harden in various manners, depending on the type of filler used.

It is noted that in DE 3822714 A1 it is described to couple pipes in a torsion-rigid manner to obtain a bearing function. Use of flexible plastic pipes is not described in this document, nor does CH 655 989 A5 disclose the use of flexible plastic pipes.

It is further noted that the technique of coupling plastic pipes to each other by means of wrapping material and hardening filler, with, for instance, a so-called taped muff, is known per se for installing electricity transporting systems. However, to the present day, no one has come up with the idea of installing a heat transporting system utilizing simple wrapping techniques for the purpose of coupling flexible plastic heat transporting pipes.

The invention further relates to a heat distribution system.

Such a system is known from practice, as indicated in the foregoing. The known system is relatively expensive and susceptible to leakage. The present invention contemplates an improved system in which the pipes are coupled in particular in a relative simple yet durable manner.

To this end, the system according to the invention is characterized by the features of claim 22.

This system is relatively simple and inexpensive, occupies relatively little space while the coupling between the pipes is relatively insusceptible to leakage.

Further elaborations of the invention are described in the subclaims. Presently, the invention will be clarified on the basis of two exemplary embodiments and the drawing. In the drawing:
Fig. 1 schematically shows a first exemplary embodiment of the invention;
Fig. 2 shows a detail II of the exemplary embodiment represented in Fig. 1;
Fig. 3 shows a first step of a method according to the invention;
Fig. 4 shows a cross-section along the line IV-IV of Fig. 3;
Fig. 5 shows a second step of a method according to the invention;
Fig. 6 shows a view along the line VI-VI of Fig. 5;
Fig. 7 shows a third step of a method according to the invention;
Fig. 8 shows a cross-sectional view along the line VIII-VIII of Fig. 7;
Fig. 9 shows a fourth step of a method according to the invention;
Fig. 10 shows a cross-sectional view along the line X-X of Fig. 9;
Fig. 11 shows a cut-away cross-sectional view along the line XI-XI of Fig. 10; and
Fig. 12 shows a similar view as Fig. 2 of a second exemplary embodiment of the invention.

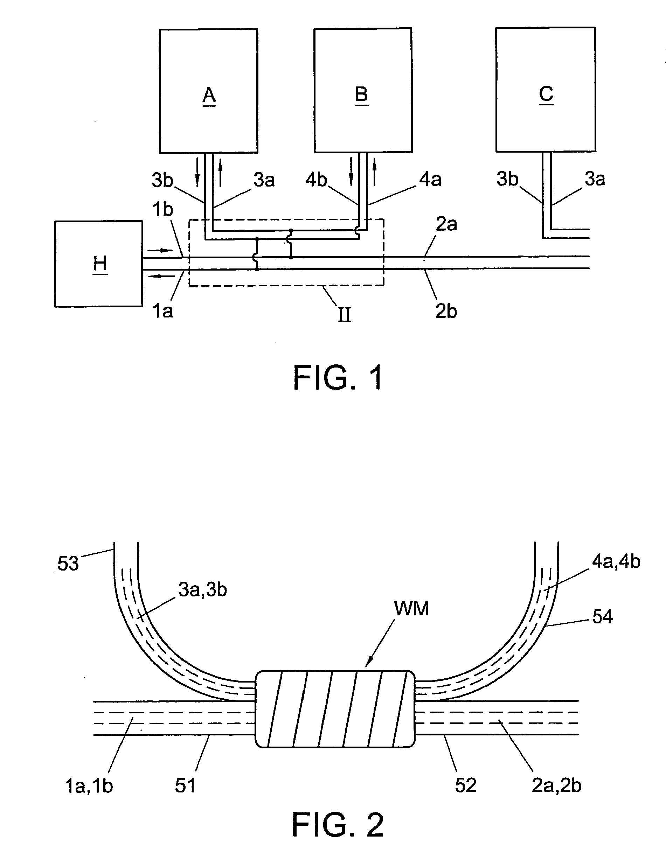

Fig. 1 schematically shows a first exemplary embodiment according to the invention. The exemplary embodiment is a heat distribution system, provided with flexible, thermally insulated plastic pipes 1a, 1b, 2a, 2b, 3a, 3b, 4a, 4b which, at least during use, transport heat transporting fluid. Preferably, the heat transporting fluid comprises water. The water with which the pipes 1a, 1b, 2a, 2b, 3a, 3b, 4a, 4b are filled is not represented in the Figures. The water transporting pipes 1a, 1b, 2a, 2b, 3a, 3b, 4a, 4b can be thermally insulated in various manners. Preferably, the pipes form part of flexible, plastic ducts 51, 52, 53, 54 which comprise, inter alia, insulating jackets which will be described in the following. It is noted that the wording "plastic" in the present application is to be understood to mean "substantially plastic" as these flexible pipes and ducts can also contain small amounts of one or more materials other than plastic.

In Fig. 1, the system is provided with coupled main supply pipes 1a, 2a for the supply of hot water. The supply pipes 1a, 2a are for instance coupled to one or more central water heating devices, one of which is schematically represented in Fig. 1 with reference numeral H. Also, coupled main return pipes 1b, 2b are provided for returning water to the heating device H, to be reheated. The main supply pipes 1a, 2a and main return pipes 1b, 2b are provided with branches to feed water to and to return water from a number of objects A, B, C to be heated, for instance houses, buildings or the like. The system may be intended for use as a district heating system.

The branches comprises branch pipes 3a, 3b, 4a, 4b which are coupled to the main pipes 1a, 1b, 2a, 2b in an advantageous manner. As shown especially in Fig 2, this coupling comprises a taped muff WM.

The taped muff WM couples two pairs of main pipes 1a, 2a, 1b, 2b, and to two pairs of branch pipes 3a 4a, 3b, 4b. Therefore, with one taped muff WM, in a simple manner, four branches can be coupled to the main pipes, which saves space in particular with respect to systems in which for each branch special couplings are to be arranged on the main pipes. Further, the taped muff can form a good, leak-proof coupling between the pipes.

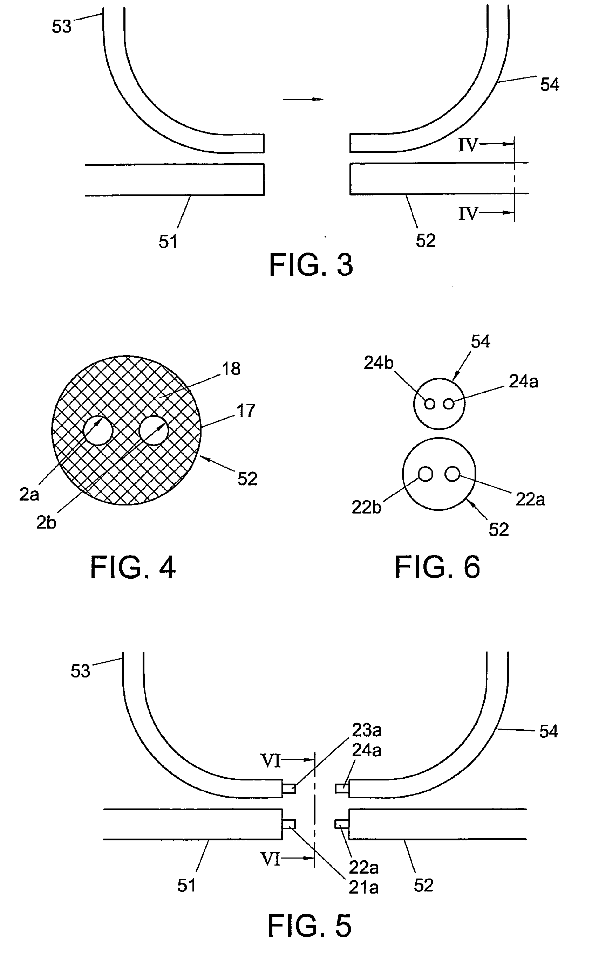

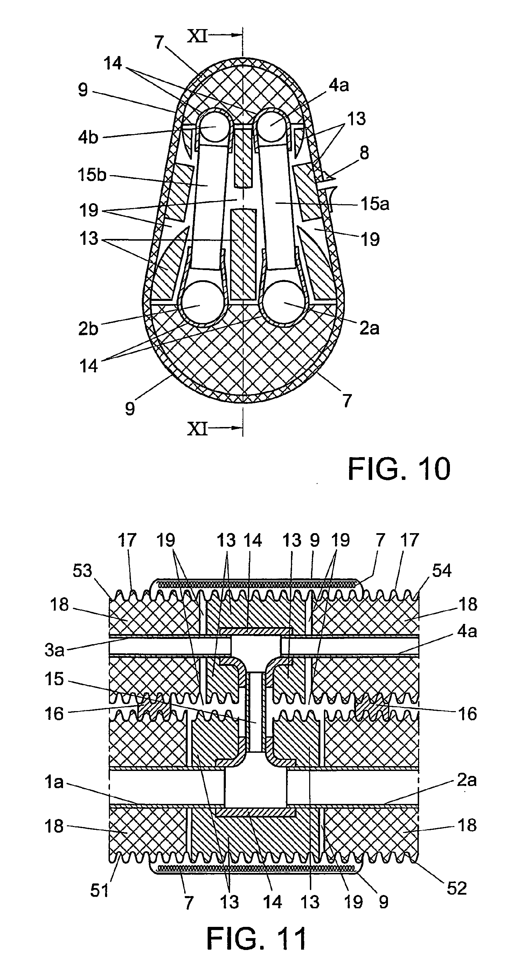

As further especially shown in Fig. 2, the system is advantageously provided with flexible ducts 51, 52, 53, 54 with each individual duct comprising one pair of the pipes mentioned. The pipes are represented in Fig. 2 in interrupted lines. Each duct 51, 52, 53, 54 furthermore comprises thermal insulating material 18 enclosing the two respective pipes, which is clearly visible in Figs. 4 and 11. This jacket 18 is provided at an outside with one or more sealing and/or protecting layers 17. Such insulated ducts, provided with inside pipes are known per se from practice. Such ducts 51, 52, 53, 54 can be installed relatively easily and rapidly and can be bent into desired curves and be made to length utilizing relatively little material. Furthermore, thermal losses of such ducts are relatively low. Alternatively, one or more of such ducts can for instance contain more than two inside pipes, or conversely, only one inside pipe.

As moreover shown in Fig. 2, the present system is provided with a first main duct 51, a second main duct 52, a first branch duct 53 and a second branch duct 54. Such branch ducts are also called connecting ducts. The first main duct 51 comprises the first supply pipe 1a and the first return pipe 1b. Analogously, the second main duct 52 comprises the second supply pipe 2a and the second return pipe 2b. The first branch duct 53 comprises a first pair of branch pipes 3a, 3b while the second branch duct 54 comprises a second pair of branch pipes 4a, 4b. In Fig. 2, the supply pipes, return pipes and branch pipes are represented in interrupted lines.

Front ends 21a, 22a of the first and second supply pipe 1a, 2a are coupled to each other. The same holds for the front ends 21b, 22b of the first and second return pipe 1b, 2b. Further, the ends 23a, 23b, 24a, 24b of the branch pipes 3a, 3b, 4a, 4b are coupled to the ends 21a 21b, 22a, 22b of the main ducts 1a, 1b, 2a, 2b, all this is according to the diagram represented in Fig. 1. The manner of coupling the different ducts and pipes is described in the following.

Figs. 3 - 11 show step-by-step an advantageous method which is specifically aimed at installing a heat distribution system, and which is particularly suited for installing the heat distribution system represented in Figs. 1 and 2.

Fig. 3 shows how in a first step, ends of four different ducts 51, 52, 53, 54 to be coupled are brought together. Represented are end parts of the above-mentioned first main duct 51, second main duct 52, the first branch duct 53 and the second branch duct 54. As shown in Fig. 4, the second main duct 52 is also provided with insulating material 18 enclosing the second main supply pipe 2a and the second main return pipe 2b. The first main duct 51 and the two branch ducts 53, 54 are built up in a similar manner, and are therefore each provided with two pipes (1a, 1b and 3a, 3b and 4a, 4b) enclosed by insulating material 18.

As shown in Figs. 5 and 6, the ends 21a, 21b, 22a, 22b, 23a, 23b, 24a, 24b of the pipes 1a, 1b, 2a, 2b, 3a, 3b, 4a, 4b are then, to some extent, brought outside the insulating material 18 of the ducts 51, 52, 53, 54 over a distance of, for instance, approximately one or a few centimetres or the like. As a result, the ends of the pipes 1a, 1b, 2a, 2b, 3a, 3b, 4a, 4b to be coupled of the ducts 51, 52, 53, 54, project to some extent outside other, insulated parts of the respective ducts. This can be carried out for instance by removing insulating material 18 from the ducts and/or by pulling the pipes from the respective ducts to some extent. This latter is possible especially if the pipes are not fixedly connected to the ducts.

As further shown in Fig. 5, it is preferred that the ends of the pipes are aligned in a manner that is advantageous for assembly. To this end, the first main duct 51 and the first branch duct 53 are positioned with their ends parallel and close together. Analogously, the ends of the second main duct 52 and the second branch duct 54 are brought parallel and close together. Therefore, the ends 21a, 21b, 23a, 23b of the pipes of the first main duct 51 and the first branch duct 53 are positioned substantially parallel to each other. Hence, the ends 22a, 22b, 24a, 24b of the pipes of the second main duct 52 and the second branch duct 54 are positioned substantially parallel to each other too.

Furthermore, the front ends of the ducts 51, 52, 53, 54 are arranged opposite each other such that facing ends of the pipes of these ducts are substantially in line with each other. In particular, the front ends 21a, 21b, 22a, 22b of the four pipes 1a, 1b, 2a, 2b, of the two main ducts 51, 52 are in line with each other, while the front ends 23a, 23b, 24a, 24b of the four pipes 3a, 3b 4a, 4b of the two branch ducts 53, 54 are also in line with each other which is clearly visible in Figs. 5 - 11.

Although less advantageous, the ends of the different pipes 1a, 1b, 2a, 2b, 3a, 3b, 4a, 4b can also not be in line with each other, or to a lesser extent, when the pipes are being coupled. The wrapping of the pipes and/or ducts to be described hereinafter can then be effected less well, but is still possible, depending on the position of the ducts/pipes.

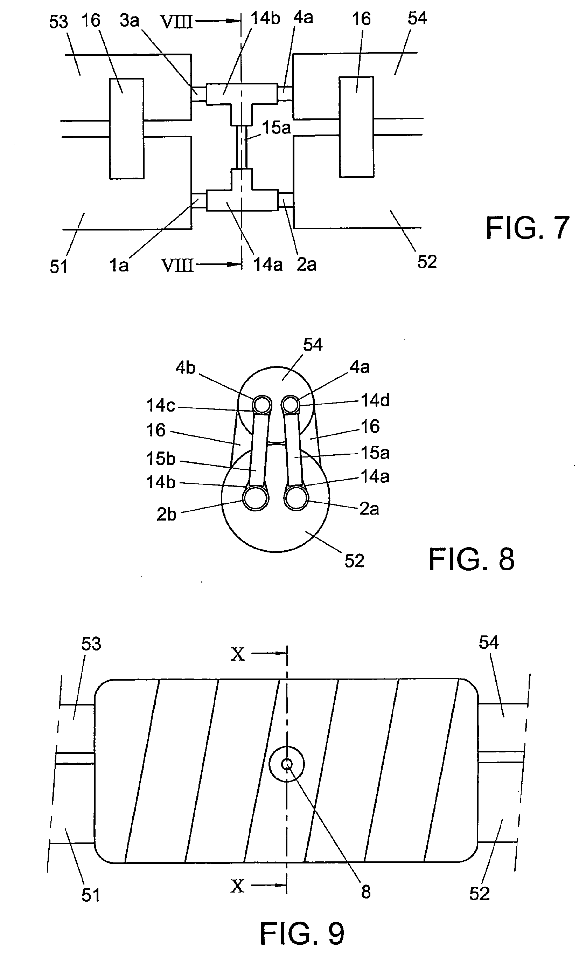

As further shown in Figs. 7 and 8, a coupling is effected between the four supply pipes 1a, 2a, 3a, 4a, and between the four return pipes 1b, 2b, 3b, 4b, by means of four standard T-pieces 14 and two straight portions of pipe 15. Preferably, the T-pieces 14 are standard commercially available parts. Such T-pieces 14 can for instance be manufactured from plastic or the like. Alternatively, the T-pieces may be manufactured from, for instance, a different material such as metal.

A first T-piece 14a couples the supply pipes 1a, 2a of the main ducts 51, 52. The second T-piece 14b couples the return pipes 1b, 2b of the main ducts 51, 52. The third T-piece 14c couples the supply pipes 3a, 4a of the branch ducts 53, 54. The fourth T-piece couples the return pipes 3b, 4b of the branch ducts 53, 54. Further, facing middle parts of the first and third T-piece 14a, 14c are coupled by a first straight portion of pipe 15a. Facing middle parts of the second and fourth T-piece 14b, 14d are coupled by a second straight portion of pipe 15b. In this manner, all supply pipes shown are coupled in fluid communication by two T-pieces 14 and a straight portion of pipe 15. The same holds for all represented return pipes. Alternatively, for instance an I-piece can be used, instead of a pair of T-pieces and a straight portion of pipe. Further, middle parts of two T-pieces may be directly coupled without additional portion of pipe, if one or both T-pieces have sufficiently long middle parts. Naturally, the coupling parts can also be of different design than described hereinabove. It is preferred that such coupling parts are standard commercially available parts, for instance coupling parts used to couple pipes of a water system, which renders the system relatively inexpensive.

In Figs. 7, 8 it is further shown that butterfly-shaped seals 16 are provided between the ducts 51, 52 or 53, 54, respectively, fitted onto each other. Each seal 16 closes off potential passages between facing longitudinal sides of these ducts. To this end, the seals 16 comprise, for instance, flexible and/or resilient material. The seals 16 are also visible in Fig. 11.

Alternatively, the ducts having the ends brought onto each other in a parallel manner can be directly fitted onto each other and be attached to each other like that, for instance by glue, by melting and/or a different, suitable manner of fastening.

Then, as shown in Figs. 9 - 11, the eight pipes 1a, 1b, 2a, 2b, 3a, 3b, 4a, 4b and the coupling parts 14, 15 are wrapped with wrapping material 9 at and adjacent the pipe ends. The wrapping material 9 is then also wrapped over a particular distance around the insulated parts of the ducts 51,52, 53, 54. The wrapping material 9 can comprises different types of wrapping material, for instance at least one of the following wrapping materials comprises: self adhesive or non-self adhesive tape, web, sheet and/or gauze. The wrapping material 9 may comprise adhesive tape, or a plastic sheet connected to the ducts with adhesive tape. In this manner, an inside space 19 is formed which inside space 19 is at least bound by the wrapping material 9, outsides of the ends of the eight pipes 1a, 1b, 2a, 2b, 3a, 3b, 4a, 4b, the butterfly seals 16 and outsides of the coupling parts 14, 15.

Optionally, before the wrapping material 9 is provided, at least the ends of the ducts are first provided with a filler guide 7, visible in Figs. 10 and 11. The filler guide 7 is suited to guide hardening filler over the outsides of the ducts, at least to one or more desired positions for hardening, which are for instance located along the outer jackets of the ducts. This is particularly advantageous when the outsides of the ducts 51, 52, 53, 54 are, for instance, of corrugated design or the like. Such a filler guide can for instance comprise a gauze, gauze mat or the like.

Then, the inside space 19, extending between the wrapping material 9, the outsides of the ends of the pipes and the coupling parts is filled up at least with liquid, hardening filler. Hardening filler is then preferably also provided between the wrapping material 9 and the insulated parts of the ducts 51, 52, 53, 54, for instance under the influence of the filler guide 7 which feeds the filler to desired positions between the wrapping material 9 and the insulated duct parts. It is preferred that the filler is also an adhesive means, which can form a pull-proof connection between the coupling parts 14, 15, pipes 1a, 1b, 2a, 2b, 3a, 3b, 4a, 4b, duct insulating material 18 and outer duct layers 17.

Preferably, any seam that may extend at, for instance, the front ends between a pipe 1a, 1b, 2a, 2b, 3a, 3b, 4a, 4b, and duct insulating material 18 and/or between duct insulating material and outer duct layers 17 are sealed off before the filler is applied. Sealing such seams is preferably carried out by means of a suitable sealant connection.

A suitable filler comprises, for instance, synthetic resin, plastic foam, a two-component filler or the like. When using the filler guide, filler can also be properly guided along the outsides of the ducts. Preferably, in time, the filler hardens which depends on the type of filler used. It is noted that the hardening filler is not represented in the Figures.

For the purpose of filling the inside space 19, a filler supply can for instance be provided in the wrapping material 19, or between the wrapping material and one or more pipes, for injecting liquid, hardening filler into this inside space. Such a supply, comprising for instance a filling nipple is indicated in Figs. 9 and 10 with reference numeral 8.

Fig. 11 further shows the optional use of the butterfly seals 16 which are provided between the duct ends of the ducts, fitted parallel on top of each other. These seals are manufactured from a material suitable for sealing, for instance PE foam or the like. These seals 16 contribute to sealing the coupling and/or bounding the space to be filled with hardening filler.

As shown in, in particular, Figs. 10 and 11, it is further advantageous when the inside space 19 is also filled with another material than hardening filler, for instance with one or more pieces 13 of an already hardened filler, or packing pieces 13 of a different suitable filler. Such packing pieces 13 are preferably provided in the inside space 19 before the space 19 is wrapped with wrapping material and is provided with the hardening filler. Through the use of the packing pieces 13 in the taped muff only little hardening material needs to be used. Furthermore, the thus obtained coupling can be designed to be relatively lightweight.

Then, for instance after the entire system has been installed, the pipes 1a, 1b, 2a, 2b, 3a, 3b, 4a, 4b, of the system are filled with, for instance, water, for the purpose of heat transport.

In this manner, a taped muff WM is used for coupling the pipes of the heat distribution system. The taped muff WM consists, substantially, of the hardening filler and the windable wrapping material. Naturally, such taped muff couplings are used at different locations in the distribution system. With the taped muff WM a relatively simple, inexpensive but durable connection between the ducts and pipes is achieved. Moreover, the coupling offered by the taped muff WM occupies little space while the coupling contains no less than four different branches.

Further, the taped muff WM, at least its hardened filler, forms a barrier against ambient liquid, which liquid has penetrated the system after a leakage in the outer layer 17 of one of the ducts 51, 52, 53, 54. Such liquid may spread further in the leaking duct, outside the respective inside pipes. However, the taped muff WM prevents the penetrated liquid from reaching other parts of the ducts. Hence, damage to the other ducts as a result of contact with the penetrated liquid can be prevented well, and, after some time for instance only the leaking duct needs to be replaced due to damage through leakage.

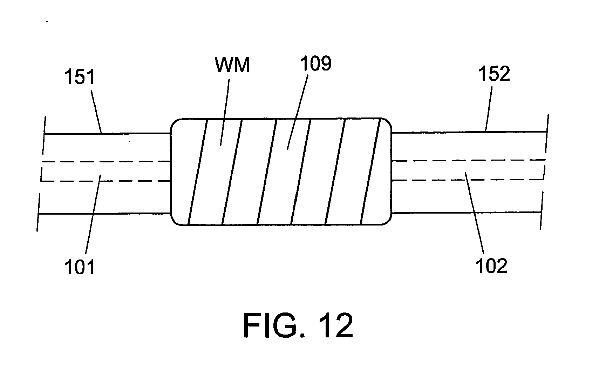

Fig. 12 shows a relatively simple elaboration of the invention. The second exemplary embodiment of the invention represented in Fig. 12 is provided with a first duct 151 comprising a first pipe 101 enclosed by insulating material, and a second duct 152 comprising a second pipe 102 which is insulated too. The ducts 151, 152 and pipes 101, 102 are each manufactured so as to be flexible, and are substantially manufactured from plastic. The ducts and pipes are advantageously coupled by a taped muff WM, substantially in the same manner as is described in the above with respect to the first exemplary embodiment, but utilizing fewer coupling means. In particular, in the second exemplary embodiment, simply, at least the following steps are carried out for coupling the ducts, analogously to the above-described method:
a) a fluid communication is provided between the two ends of the two pipes 101, 102 to be coupled;
b) the pipe ends and the fluid communication are wrapped with wrapping material 109; and
c) an inside space, extending between, on the one side, the wrapping material 109 and, on the other side, the pipes 101, 102 and the fluid communication, is at least filled with hardening filler (not represented).

In this manner, the two ducts 151, 152 and pipes 101, 102 are coupled in a relatively leak-proof and durable manner. Furthermore, the taped muff WM forms a partition between the two ducts 151, 152, which partition can prevent liquid present within the insulating jacket, but outside the inside pipe of the one duct (for instance ground water having penetrated the duct through a leak in the insulating jacket), from reaching the other duct.

Analogously to the first exemplary embodiment, in the second exemplary embodiment for instance also, one or more coupling parts can be used for coupling the pipes 101, 102. Further, for instance a filler guide may be provided, a filler supply can be arranged and/or the like. Optionally, in this case too, the inside space can be provided with, for instance, a number of suitable packing pieces 13 to reduce the use of hardening filler, and/or a filler guide 7 to guide the hardening filler to desired positions for hardening.

It is self-evident that the invention is not limited to the exemplary embodiment described. Various modifications are possible within the framework of the invention as set forth in the following claims.

For instance, during installation, the pipes and/or ducts may already have been supplied at the desired length, or be cut to size. One or more branches can for instance be provided on already existent front ends of a duct. In addition, one duct may be cut through, thus providing the duct with new front ends at this cut. Then, one or more desired branch ducts can simply be coupled to the new front ends, utilizing a taped muff WM.

## Claims

1. A method for installing a heat distribution system, wherein insulated flexible plastic pipes (1, 2, 3, 4), intended for transporting a heat transporting fluid, are coupled by front ends (21, 22, 23, 24), the coupling being effected by:
a) providing a fluid communication (14) between at least two ends (21, 22, 23, 24) to be coupled of respective pipes (1, 2, 3,4);
b) wrapping wrapping material (9) around at least said pipe ends (21, 22, 23, 24) and said fluid communication (14); and
c) filling an inside space (19) extending between, on the one side, the wrapping material (9) and, on the other side, said pipes (1, 2, 3, 4) and said fluid communication (14) at least with hardening filler;
wherein at least three flexible insulated ducts (51, 52, 53, 54) are provided, each individual duct (51, 52, 53, 54) comprising at least one first pipe, for instance a supply pipe (1a, 2a, 3a, 4a) or a return pipe (1b, 2b, 3b, 4b); while the first pipes (1a, 2a, 3a) of the at least three flexible ducts (51, 52, 53) are coupled by front ends by means of the above steps a), b) and c).

2. A method according to claim 1, wherein said fluid communication is provided by coupling said pipe ends (21, 22, 23, 24) through at least one coupling part (14).

3. A method according to claim 1 or 2, wherein a filler supply (8) is provided in said wrapping material (9), or between the wrapping material and one or more said pipes, for feeding liquid hardening filler to said inside space (19).

4. A method according to any one of the preceding claims, wherein said hardening filler comprises plastic foam.

5. A method according to any one of the preceding claims, wherein said inside space is also filled up with another material than hardening filler, for instance with one or more packing pieces (13) of already hardened filler or a different suitable filler, and/or is provided with a filler guide (7) to guide the hardening filler to one or more desired positions for hardening.

6. A method according to any one of the preceding claims, wherein each individual duct (51, 52, 53, 54) comprises at least one first and one second pipe (1a, 1b, 2a, 2b, 3a, 3b, 4a, 4b) for instance a supply pipe (1a, 2a, 3a, 4a) and a return pipe (1b, 2b, 3b, 4b), while the first pipes (1a, 2a, 3a, 4a) of the flexible ducts are coupled to each other by means of said steps a), b), c), and the second pipes (1b, 2b, 3b, 4b) of the flexible ducts are coupled to each other by means of said steps a), b), c).

7. A method according to claim 6, wherein the first pipe (1a) of a first duct (51) is coupled to the first pipe (2a) of a second duct (52), and the second pipe (1b) of the first duct (51) to the second pipe (2b) of the second duct (52).

8. A method according to claim 6 or 7, wherein the front ends to be coupled of said ducts (51, 52) are arranged opposite each other such that ends of the pipes of the duct are substantially in line with each other.

9. A method according to any one of the preceding claims, wherein the ends to be coupled of a first and a third duct (51, 53) which are situated at the ends of the pipes to be coupled are positioned substantially parallel to each other.

10. A method according to any one of the preceding claims, wherein a fourth flexible, insulated duct (54) is provided, while the first pipe (4a) of the fourth duct is coupled to the first pipes (1a, 2a, 3a) of the first, second and third duct, and a second pipe (4b) of the fourth duct to the second pipes (1b, 2b, 3b) of the first, second and third duct.

11. A method according to claim 9 and 10, wherein front ends to be coupled of the third and fourth duct (53, 54) are arranged opposite each other such that ends of the pipes of these ducts (53, 54) are substantially in line with each other.

12. A method according to claim 10 or 11, wherein ends to be coupled of the second (52) and fourth duct (54), which are located at the ends of the pipes to be coupled, are positioned substantially parallel to each other.

13. A method according to any one of the preceding claims, wherein each flexible duct is also at least provided with thermally insulating material (18) which encloses the at least two pipes of this duct, for instance a thermally insulating jacket.

14. A method according to any one of the preceding claims, wherein the ends to be coupled of the pipes (1,2, 3, 4) of each said duct (51, 52, 53, 54) project outside an insulated part of the respective duct.

15. A method according to claim 14, wherein said wrapping material (9) is also wrapped over a particular distance around insulated parts of said ducts (51, 52, 53, 54), while, preferably, said hardening filler is also provided between said wrapping material (9) and said insulated parts of the ducts (51, 52, 53, 54).

16. A method according to any one of the preceding claims, wherein end parts of at least two of said ducts are preferably positioned parallel to or adjacent each other, while preferably, a sealing piece (16), for instance a butterfly-shaped sealing piece, is provided between facing longitudinal sides of these ducts for sealing potential passages between those longitudinal sides.

17. A method according to at least claim 2, wherein said coupling piece comprises at least one T-piece or I-piece.

18. A method according to claims 10 and 17, wherein at least four T-pieces (14) or at least two I-pieces, or at least one I-piece and two T-pieces are provided for coupling the at least eight pipes of said four ducts (51, 52, 53, 54).

19. A method according to any one of the preceding claims, wherein said wrapping material comprises at least one of the following wrapping materials: self-adhesive or non-self adhesive tape, web, sheet and/or gauze.

20. A method according to any one of the preceding claims, wherein said wrapping material (9) is wrapped at least once around the pipe ends (21, 22, 23, 24) to be coupled and said fluid communication (4).

21. A method according to any one of the preceding claims, wherein said wrapping material (9) forms a taped muff (WM) for coupling the pipes.

22. A heat distribution system, installed by means of a method according to any one of the preceding claims, wherein the pipes of the system are filled with a heat transporting fluid, in particular water.

23. Use of at least one taped muff (WM) for coupling pipes of a heat distribution system, for instance in a method according to any one of claims 1 - 21.
